# EUROPEAN PATENT SPECIFICATION

(11) **EP 2 725 290 B1**
(45) Date of publication and mention of the grant of the patent: **01.07.2015**
(21) Application number: 13190102.7
(22) Date of filing: 24.10.2013
(51) Int. Cl.: F21S 8/10, F21V 17/00, B29C 65/16, B29C 65/14

(54) **Vehicular lamp and method for producing the same**
Fahrzeuglampe und Herstellungsverfahren dafür
Phare de véhicule et son procédé de production

(30) Priority: 25.10.2012 JP 2012235234
(43) Date of publication of application: 30.04.2014
(73) Proprietor: Koito Manufacturing Co., Ltd., Tokyo 108-8711 (JP)
(72) Inventor: Sagesaka, Yuji, SHIZUOKA-SHI, SHIZUOKA (JP); Suzuki, Michihiko, SHIZUOKA-SHI, SHIZUOKA (JP)
(74) Representative: Intès, Didier Gérard André

(56) References cited:
- JP-A- 2003 123 512
- JP-A- 2005 119 239
- JP-A- 2005 339 873
- JP-A- 2009 137 101
- US-A1- 2001 028 567

## Description

### CROSS REFERENCE TO RELATED APPLICATION

This application is based on and claims priority from Japanese Patent Application No. 2012-235234 filed on October 25, 2012 with the Japan Patent Office.

### TECHNICAL FIELD

The present disclosure relates to a vehicular lamp provided with a lamp housing in which a front cover is welded to a lamp body by irradiation by a laser beam, and a manufacturing method thereof.

### BACKGROUND

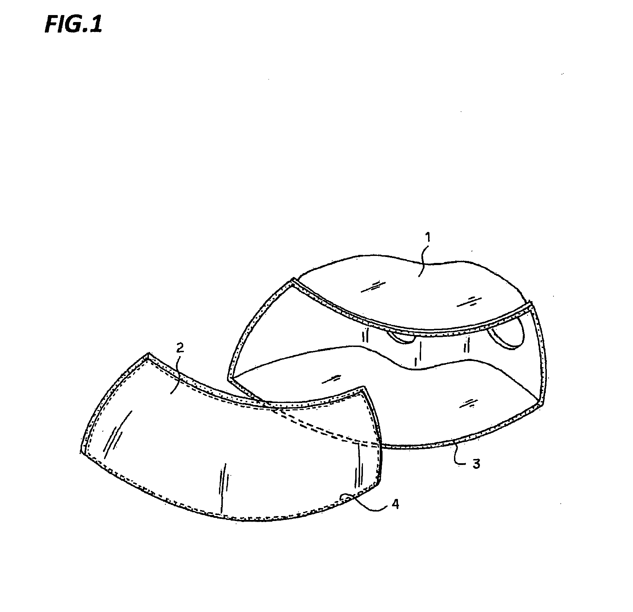

One of vehicular lamp manufacturing processes is a process of integrally fixing a transparent front cover to a lamp body of a bowl shape. In the fixing process, a technique of welding the lamp body and the front cover is used. For example, as illustrated in FIG. 1, when a lamp housing is configured by a lamp body 1 which has a front opening and a front cover 2 which is formed of a transparent resin and fixed to the front opening of the lamp body 1, a flange 3 is provided along the peripheral edge of the front openinging of the lamp body 1, the front surface of the flange 3 and the inner surface of the peripheral edge portion 4 of the front cover 2 (both depicted with dots in FIG.1) are broght into close contact with each other, and both the lamp body 1 and the front cover 2 are welded and integrated with each other at the close contact surfaces as welding surfaces. Such welding methods for vehicular lamps are disclosed, for example, in Japanese Patent Laid-Open Publications Nos. 2009-137101, 2005-119239, and 2003-123512, or in U.S. Patent Application Publication No. US 2001/028567 A1.

In the welding using such a laser beam, the laser beam irradiates a welding portion to melt the flange surface of the lamp body and the heat generated when the flange surface is melted is transferred to the peripheral edge portion of the front cover to melt the peripheral edge portion as well so that the peripheral edge portion is welded to the flange. Also, Japanese Patent Laid-Open Publication No. 2005-339873 has proposed a technique of welding in which, when an inner lens is welded to a lamp body, either the lamp body or the inner lens contains the light absorption material so that the inner lens may be melt easily when a laser beam is irradiating.

### SUMMARY

In the former method, there is a problem in that since it is difficult to perfrom heat transfer effectively from the lamp body to the front cover and a lot of time is required for melting the peripheral edge portion of the front cover, the work efficiency of welding is poor. Also, in the front cover, since there is a large temperature difference between the welding portion melted during welding and an unmolten portion which is adjacent to the welding portion, internal stresses by a thermal strain due to the temperature difference are accumulated when the peripheral edge portion is quenched during cooling after welding. Especially, when such internal stresses occur in a lamp in which an outer lens having an exposed front surface as a front cover is welded to a lamp body, fine cracks called solvent cracks occur easily on the front surface of the outer lens when the the outer lens is cleaned with alcohol or other detergents, thereby deteriorating the quality of the lamp. Thus, an annealing process for cooling the welding portion and the adjacent portion slowly is required. When the processing time of the annealing process is included, a total welding time is prolonged, thereby reducing manufacturing efficiency of the lamp.

In contrast, in the technique of Japanese Patent Laid-Open Publication No. 2005-339873, when a laser beam is irradiating, the irradiating laser beam is absorbed by the light absorption material, thereby causing the peripheral edge portion of the inner lens to generate heat and thus, melt the welding portion. Thus, the thermal strain by the temperature difference between the welding portion and an adjacent portion which is adjacent to the welding portion may be suppressed and the necessity of annealing is reduced. As a result, the total welding time may be shortend. However, on the other hand, there is the region of the inner lens irradiated by the laser beam during welding may generate heat excessively and thus, the corresponding region may be thermally deformed. When the thermal deformation occurs, the light emitted from a light source accommodated within the lamp may be refracted abnormally in the thermally deformed portion when penetrating the inner lens, thereby affecting the light distribution of the lamp badly. Especially, when excessive heat generation occurs in the outer lens, the occurrence of the above-described solvent cracks also become remarkable.

The present disclosure provides a vehicular lamp and a method of manufacturing the same which allow a thermal strain in a welding portion to be suppressed, a welding time to be shortened, and a thermal strain during welding and solvent cracks after welding to be suppressed.

According to an aspect of the present disclosure, provided is a vehicular lamp which includes a lamp housing configured by a lamp body and a front cover welded to the lamp body and having a front surface exposed to the outside. Each of the lamp body and the front cover contains a light absorption material to increase a heat generating effect by light irradiation and the heat generating effect of the front cover by the light absorption material is lower than the heat generating effect of the lamp body. Here, the heat generating effect means a degree of a temperature rise effect in relation to the irradiated light energy. The light absorption material of the front cover is a light absorption material that is contained in an amount which does not cause the front cover to melt only by the irradiation of light irradiated during welding.

In the present disclosure, only a region of the front cover excluding an effective surface transmitting light effective as an illuminating light or the entire front cover contains a light absorption material which has light transmissivity.

According to another aspect of the present disclosure, provided is a method of manufacturing a vehicular lamp which includes bringing a front cover into close contact with a lamp body, and irradiating light on the closely contacted portions to weld the lamp body and the front cover. Each of the lamp body and the front cover contains a light absorption material in order to increase a heat generating effect by the light irradiation. Especially, it is desirable that the light absorption material is contained such that the heat generating effect of the front cover is lower than the heat generating effect of the lamp body.

According to the vehicular lamp of the present disclosure and the manufacturing method thereof, since each of the lamp body and the front cover contains the light absorption material in order to increase the heat generating effect by the light irradiation, a proper welding may be achieved by melting the welding portions of the lamp body and the front cover. Also, since the front cover contains the light absorption material such that the heat generating effect of the front cover is lower than that of the lamp body, the heat is generated by the light irradiated while welding without melting an adjacent portion which is adjacent to the welding portion of the front cover. As a result, the temperature difference between the welding portion and the adjacent portion may be reduced and cooling after welding is performed slowly so that the occurrence of a thermal strain may be suppressed and solvent cracks may be suppressed even when the front cover is configured as an outer lens. Thus, annealing becomes unnecessary and a welding time or a lamp manufacturing time may be shortened. Further, the adjacent portion does not melt during welding and a thermal deformation of the front cover by melting may be suppressed, and a light distribution of the lamp is not badly affected.

The above-described summary is illustration purposes only and does not intend to limit in any ways. In addition to the illustrative embodiments, examples, and features described above, additional embodiments, examples, and features will become apparent by referring to the drawings and the following detailed descriptions.

### BRIEF DESCRIPTION OF THE DRAWINGS

FIG.1 is a perspective view of an example of a lamp housing to which the present disclosure is applied.
FIG. 2 is a conceptual view illustrating an overall configureation of a welding apparatus configured to manufacture the lamp housing of FIG. 1.
FIGS. 3A and 3B are cross-sectional views for describing a welded state in welding portions.
FIGS. 4A and 4B are front views of outer lenses each illustrating a region containing a light absorption material.
FIGS. 5A and 5B are graphes each illustrating a temperature change due to a heat generating effect during welding.

### DETAILED DESCRIPTION

In the following detailed description, reference is made to the accompanying drawings which form a part thereof. The illustrative embodiments described in the detailed descriptions, drawings, and claims do not intend to limit. Other embodiments may be utilized and other modified examples may be made without departing from the scope of the subject matter presented here.

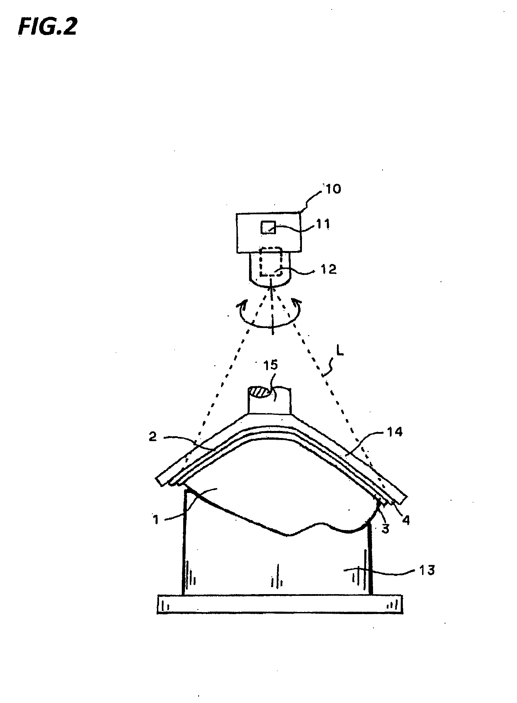

Next, an exemplary embodiment of the present disclosure will be described with reference to drawings. FIG. 2 is a conceptual view of an example of a welding apparatus configured to manufacture a lamp of the present exemplary embodiment. The welding apparatus includes a light deflection device 10 configured to deflect and irradiate a laser beam emitted from a laser beam source 11 towards an arbitrary direction using a light deflection unit 12 such as, for example, a galvano mirror. In addition, the welding apparatus includes a work table 13 where the the lamp body 1 is disposed such that the front opening of the lamp body 1 faces upwards, a front cover 2 is disposed on the disposed lamp body 1, and a pressing plate 14 is further disposed thereon. The pressing plate 14 presses the front cover 2 downwardly and brings a peripheral edge portion 4 of the front cover 2 into a contact with a flange 3 of the front opening of the lamp body 1. A laser beam L which is deflection-controlled by the light deflection device 10 is irradiating while scanning along the flange 3 of the lamp body 1.

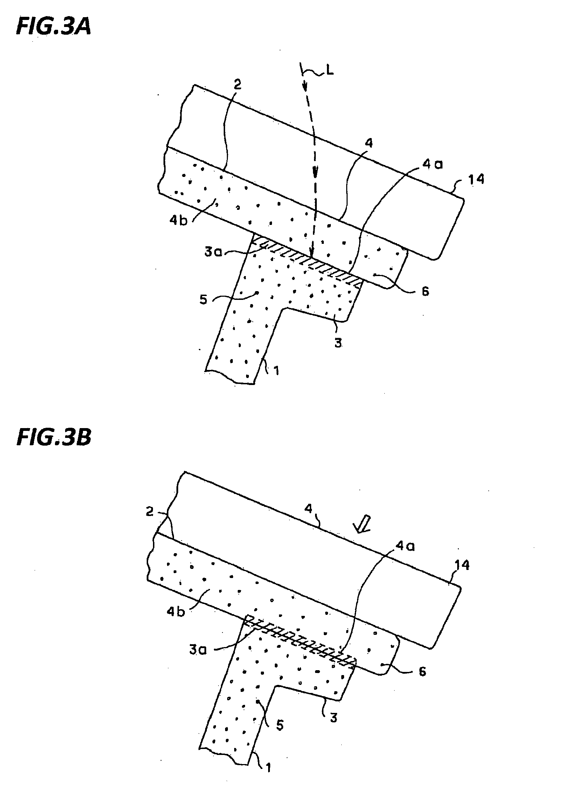

In the present exemplary embodiment, an example in which the exemplary embodiment is applied to a rear combination lamp of an automobile as a vehicular lamp is described. In the lamp body 1, as illustrated as cross-sectional view of the flange 3 and the peripheral edge portion 4 in FIG. 3A, at least the flange 3 which serves as a welding portion 3a is formed of resin that contains a light absorbing material such as, for example, carbon black. Here, as illustrated with dots in FIG. 3A, the entire lamp body 1 contains carbon black as a light absorption material 5. Such a lamp body 1 may be molded through a mold-molding of a resin which contains, for example, carbon black.

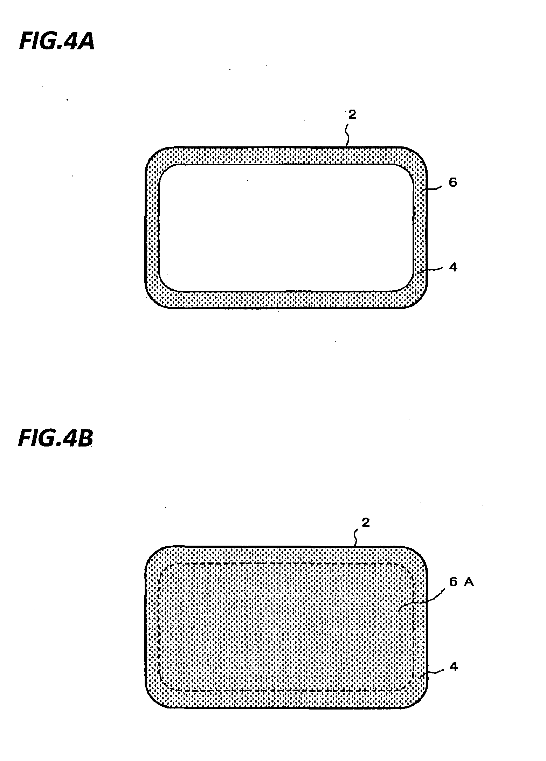

The front cover 2 is configured as a front cover of which the front surface is exposed to the outside when the lamp is equipped in an automobile, here, as an outer lens exposed to the outside of the front surface of the lamp and is formed of a red transmissive resin. As the resin of this outer lens 2, a resin which may be welded to the melted flange 3 of the lamp body 1 which is melted or softened when heat is generated is used. Although a light absorption material 6 such as, for example, carbon black is contained in the outer lens 2 as in the lamp body 1, as illustrated in FIG. 4A, the light adsorption material 6 is contained in the peripheral edge portion 4 of ther outer lens 2, that is, only in the welding portion 4a and an adjacent portion 4b. In the irradiating light which penetrates the outer lens 2, the light portion effective for illumination does not penetrates the peripheral edge portion 4 which contains the light absorption material 6. That is, the peripheral edge portion 4 is a region which transmits light which does not function as an illuminating light. Therefore, even if the above-described region undergoes deterioration in light transmissivity by containing the light absorption material 6 to be contained, the region does not has a bad influence on the lamp's own lighting.

In the present exemplary embodiment, the content of the light absorption material 6 per unit volume in the outer lens 2 is set such that the heat generating effect of the lamp body 1 by the light absorption material 5 is lower than the heat generating effect in the outer lens 2. That is, the contents of the light absorption materials 5, 6 are set such that, when the same laser light is irradiating to the lamp body 1 and the outer lens 2 to cause heat to be generated in the lamp body 1 and the outer lens 2 by the light absorption materials 5, 6, respectively, the rise in temperature increase of the outer lens 2 is lower than the rise in temperature of the lamp body 1. In other words, the contents are set such that, when the same laser beam is irradiating, the outer lens 2 does not melt even if the the lamp body 1 melts. In other words, the content of the light absorption material 6 in the outer lens 2 is such that even if the light absorption material 6 absorbs the laser beam and the heat is generated in the outer lens 2 to raise the temperature when the laser beam is irradiating to the welding portion 4a during welding, the outer lens 2 does not melt only by the heat generation.

For example, the concentration of the light absorption material 6 in relation to the outer lens 2 is set to be in the range of 1×10⁻⁴wt% to 1×10⁻²wt%. Preferably, it is set to to be in the range of 1×10⁻⁴ wt% to 1×10⁻³ wt%. When the concentration is lower than 1×10⁻⁴ wt%, a slow cooling effect may not be obtained since the heat generation in the outer lens 2 is insufficient. When it is higher than 1×10⁻² wt%, the outer lens 2 melts due to the excessive heat generation in the outer lens. The range of 1×10⁻³ wt% to 1×10⁻² wt% is properly adjusted according to the difference of manufacturing conditions such as, for example, intensity of a laser beam and an irradiation time.

When the lamp body 1 and the outer lens 2 is welded, as illustrated in FIG. 3A, after the peripheral edge portion 4 of the outer lens 2 is superimposed on the flange 3 of the lamp body 1, the inner surface of the peripheral edge portion 4 is closely contacted with the surface of the flange 3 by the pressing plate 14 illustrated in FIG. 2, and the laser beam is caused to penetrate the pressing plate 14 and irradiate on both the closely contacting surfaces. Then, the laser beam penetrates the pressing plate 14 and irradiates on both the contacting surfaces. When the laser beam is irradiating, heat is generated by the light absorption material 5 contained in the lamp body 1 and the welding portion 3a, that is, the surface of the flange 3 melts as illustrated with hatching lines. Also, at the same time, heat is generated in the welding portion 4a and the adjacent portion 4b by the light absorption material 6 contained in the outer lens 2. The heat generated when the welding portion 3a of the lamp body 1 melts is transferred and added to the peripheral edge portion 4 of the outer lens 2, and thus, the welding portion 4a of the peripheral edge portion 4 also melts. In addition, the peripheral edge portion 4 is pressed to the flange 3 by the pressing plate 14. Therefore, as illustrated in FIG. 3B, each of the welding portions 4a, 3a of the peripheral edge portion 4 and the flange 3 becomes in a bonded state. At this time, since the content of the light absorption material 6 in the outer lens 2 is limited, the adjacent portion 4b of the peripheral edge portion 4 does not melt even if the heat is generated by the light absorption material 6.

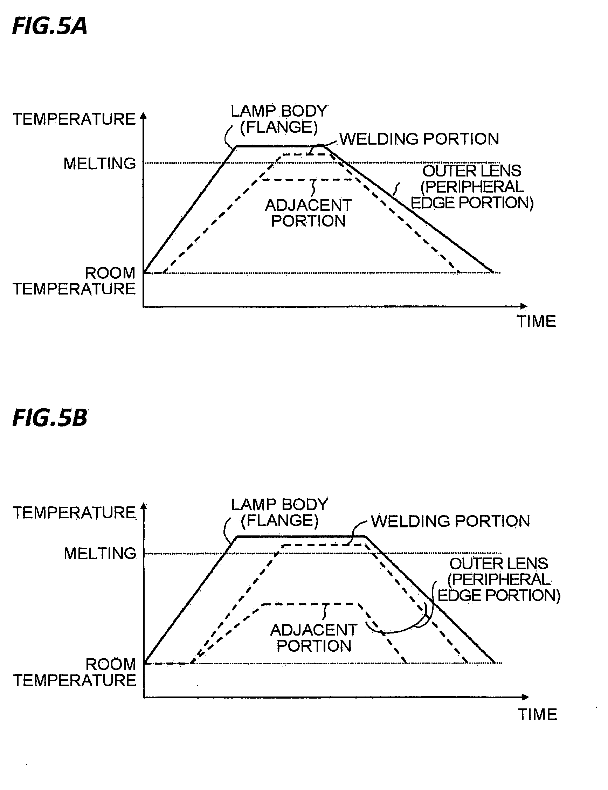

FIG. 5A is a graph illustrating a temperature change of the flange 3 and the peripheral edge portion 4 (the welding portion 4a and the adjacent portion 4b) during the above-described welding. Heat is generated in the flange 3 and the peripheral edge portion 4 by irradiation by the laser beam. The flange 3 becomes in a melted state first, and then the welding portion 4a of the peripheral edge portion 4 becomes in a melted state. By the melting of the flange 3 and the welding portion 4, welding is performed. At this time, since heat conduction from the flange 3 to the adjacent portion 4b is little, the adjacent portion 4b does not melt. When the irradiation by the laser beam is stopped, each of the welding portions 3a, 4a of the flange 3 and the peripheral edge portion 4 is cooled, solidified, and welded. At this time, due to the heat generation during welding, the flange 3 and the peripheral edge portion 4 are cooled slowly. That is, since the lamp body 1 contains a sufficient amount of the light absorption material 5, heat generation during welding is remarkable and the entire lamp body 1 including the flange 3 is cooled at a slow speed. In the peripheral edge portion 4 containing the light absorption material 6 of the outer lens 2, the heat is generated in the entire peripheral edge portion 4, that is, the welding portion 4a and the adjacent portion 4b. Thus, the temperature difference between the welding portion 4a and the adjacent portion 4b is small and, moreover, a lot of time is required for cooling the peripheral edge portion 4. Accordingly, the same effect as so-called annealing is obtained and occurence of a thermal strain in the peripheral edge portion 4 of the outer lens 2 is suppressed.

Therefore, since the annealing after welding becomes unnecessary or the annealing time may be substantially shortend, the total welding time may be shortened. Also, since the amount of the thermal strain is reduced in the outer lens 2 of a manufactured lamp, solvent cracks do not occur even when the surface of the outer lens 2 is exposed to the exterior of an automobile and cleaned by a detergent. On the other hand, the welding portion 4a of the outer lens 2 is melted by the heat transferred from the lamp body 1. However, even if the heat is generated in the adjacent portion 4b by a laser beam, since the adjacent portion 4b does not melt with that heat alone, a thermal deformation is suppressed. Since the outer lens 2 transmits the light emitted from a light source disposed within the lamp housing and irradiates it to the outside, the light irradiation in a proper light distribution may be ensured without suffering from abnormal refraction of the emitted light which may be caused when the thermal deformation has occured.

In addition, FIG. 5B illustrates a temperature change when the outer lens 2 does not contain the light absorption material. Since heat is generated in the outer lamp 2 from the time when heat is generated in the lamp body 1 and the welding portion 3a of the flange 3 becomes in a melting state, a lot of time is required for melting the welding portion 4a of the outer lens 2. At this time, the rise in temperature due to the heat generation is small in the adjacent portion 4b of the welding portion 4a of the outer lens 2 and the temperature difference between the adjacent portion 4b and the welding portion 4a is large. The outer lens 2 is cooled after welding. However, since the temperature difference between the welding portion 4a and the adjacent portion 4b is large, a thermal strain due to cooling occurs. As described above, when the outer lens 2 does not contain the light absorption material, a lot of time is required for welding and solvent cracks in the outer lens 2 occur easily. In order to prevent this, annealing is required as described above.

Here, as for the configuration in which only the peripheral edge portion 4 of the outer lens 2 contains the light absorption material, the peripheral edge portion 4 may be molded with a resin that contains a light absorption material and a region that is effective for the light irradiation may be molded with a resin that does not contain a light absorption material by a two-color molding of the resin that contains the light absorption material and the resin which does not contain the light absorption material. Also, if possible, the light absorption material may be selectively contained in the peripheral edge portion 4 of the outer lens 2 by, for example, an ion implantation method.

In the present disclosure, as for the light absorption material, other materials except the carbon black may be used. For example, a transmissive light absorption material may be used. Even if the transmissive light absortion material is contained in this way, the the transmissivity of the outher lens 2, that is, the front cover hardly causes a problem. Thus, the entire region of the front cover may be configured to contain a tranmissive light absorption material 6A as illustrated in FIG. 4B. In such a case, the front cover may be manufactured by adding the light absortion material 6A to, for example, a resin for molding the front cover and then molding the resin. Therefore, the manufacturing of the front cover may be much facilitated. Also, when the outer lens 2 is configured by a smoke lens (a semi-transmissive lens), the entire outer lens 2 may contain a non-transmissive light absorption material, such as, for example, carbon black.

As described above, the present disclosure may provide acting effects as described above by adding a light absorption material to the front cover. Especially, when the front cover is configured such that a heat generating effect by the light absorption material in the front cover is lower than a heat generating effect by the light absorption material in the lamp body, the acting effect may become more remarkable. In this case, in the above-described exemplary embodiment, the heat generating effect of the front cover is lowered compared with that of the lamp body by adjusting the content of the light absorption material contained in the front cover per unit volume. However, the heat generating effect may be lowered by using a light absorption material which has low light absorption efficiency. For example, carbon black may be used as a light absorption material for the lamp body and a light absorption material which has a low light absorption effect compared with the carbon black may be used for the front cover. Even in this way, when the same laser beam is irradiating, the adjacent portion of the front cover does not melt even if the lamp body melts. Thus, the front cover may be suppressed from being deformed and the light distribution characteristic of the light may not be affected by the deformation.

Also, in the present disclosure, the heat generating effect by the light absorption material in the front cover is not lowered compared with the heat generating effect in the lamp body merely by using light absorption materials which are different from each other in light content per unit volume or light absorption efficiency. That is, when the lamp body is configured by a colored resin, the light absorption efficiency, in other words, a heat generating effect of the material itself as compared to the transmissive front cover. Therefore, even if the content of the light absorption material contained in the front cover is more than the content of the heat absorption material contained in the lamp body, the heat generating effect in the front cover may be set to be lower than the heat generating effect in the lamp body.

In the above-described exemplary embodiment of the present disclosure, an example in which a lamp body and an outer lens of a rear combination lamp of an automobile are welded together has been described. However, the lamp body and the outer lens described here are not limited to the configuration of the exemplary embodiment. For example, the lamp may be a lamp that is configured by using a reflector of a lamp unit as the lamp body and welding a lens which is used in a state where the front surface is exposed to the outside to the reflector as the front cover.

The present disclosure may be employed in a vehicular lamp having a configuration in which a front cover having a front surface exposed to the outside is welded to a lamp body and a manufacuting method thereof.

From the foregoing, it will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A vehicular lamp comprising:
a lamp housing including a lamp body (1), and a front cover (2) welded to the lamp body (1) and having a front surface exposed to the outside,
wherein the lamp body (1) is formed of a resin containing a first light absorption material (5),
the front cover (2) is formed of a resin containing a second light absorption material (6), wherein, when the same laser light irradiates the front cover (2) and the lamp body (1), the rise in temperature caused in the front cover (2) by the light absorption material (6) contained in the front cover (2) is lower than the rise in temperature caused in the lamp body (1) by the light absorption material (5) contained in the lamp body (1),
wherein the second light absorption material (6) is a light absorption material with an amount which does not cause the front cover (2) to melt only by the irradiation of light irradiating during welding.

2. The vehicular lamp of claim 1, wherein only a peripheral region of the front cover (2) which does not function as an illuminating light, or the entire front cover, contains the second light absorption material (6).

3. A method of manufacturing a vehicular lamp, the method comprising:
bringing a front cover (2) having a front surface exposed to the outside into close contact with a lamp body (1) ; and
irradiating laser light on a close contact portion to weld the lamp body (1) and the front cover (2),
wherein the lamp body (1) formed of a resin containing a first light absorption material (5),
the front cover (2) is formed of a resin containing a second light absorption material (6),
wherein when the same laser light irradiates the lamp body (1) and the front cover (2), the rise in temperature caused in the front cover (2) by the second light absorption material (6) is lower than the rise in temperature caused in the lamp body (1) by the first light absorption material (5),
wherein the second light absorption material (6) is a light absorption material with an amount which does not cause the front cover (2) to melt only by the irradiation of light irradiating during welding.

## Patentansprüche

1. Fahrzeugleuchte, umfassend:
ein Leuchtengehäuse, das einen Leuchtenkörper (1) und eine Frontabdeckung (2) beinhaltet, die an den Leuchtenkörper (1) geschweißt ist und eine Vorderfläche aufweist, die zur Außenseite hin freiliegt,
wobei der Leuchtenkörper (1) aus einem Harz gebildet ist, das ein erstes Lichtabsorptionsmaterial (5) enthält,
wobei die Frontabdeckung (2) aus einem Harz gebildet ist, das ein zweites Lichtabsorptionsmaterial (6) enthält, wobei bei einer Bestrahlung der Frontabdeckung (2) und des Leuchtenkörpers (1) mit dem gleichen Laserlicht der Temperaturanstieg, der durch das Lichtabsorptionsmaterial (6) in der Frontabdeckung (2) verursacht wird, geringer ist als der Temperaturanstieg, der im Leuchtenkörper (1) durch das im Leuchtenkörper (1) enthaltene Lichtabsorptionsmaterial (5) verursacht wird,
wobei das zweite Lichtabsorptionsmaterial (6) ein Lichtabsorptionsmaterial in einer Menge ist, die bewirkt, dass die Frontabdeckung (2) nicht allein durch Bestrahlen mit Licht während des Schweißens schmilzt.

2. Fahrzeugleuchte nach Anspruch 1, wobei nur ein Umfangsbereich der Frontabdeckung (2), der nicht als Beleuchtung dient, oder die gesamte Frontabdeckung das zweite Lichtabsorptionsmaterial (6) enthält.

3. Verfahren zur Herstellung einer Fahrzeugleuchte, wobei das Verfahren umfasst:
Eng-in-Kontakt-Bringen einer Frontabdeckung (2), die eine Frontfläche aufweist, die zur Außenseite hin freiliegt, mit einem Leuchtenkörper (1) und
Laserbestrahlen eines Abschnitts in engem Kontakt, um den Leuchtenkörper (1) und die Frontabdeckung (2) zu verschweißen,
wobei der Leuchtenkörper (1) aus einem Harz gebildet ist, das ein erstes Lichtabsorptionsmaterial (5) enthält,
wobei die Frontabdeckung (2) aus einem Harz gebildet ist, das ein zweites Lichtabsorptionsmaterial (6) enthält,
wobei bei einer Bestrahlung des Leuchtenkörpers (1) und der Frontabdeckung (2) mit dem gleichen Laserlicht der Temperaturanstieg, der durch das zweite Lichtabsorptionsmaterial (6) in der Frontabdeckung (2) verursacht wird, geringer ist als der Temperaturanstieg, der durch das erste Lichtabsorptionsmaterial (5) im Leuchtenkörper (1) verursacht wird,
wobei das zweite Lichtabsorptionsmaterial (6) ein Lichtabsorptionsmaterial in einer Menge ist, die bewirkt, dass die Frontabdeckung (2) nicht allein durch Bestrahlen mit Licht während des Schweißens schmilzt.

## Revendications

1. Lampe pour véhicule comprenant :
un boîtier de lampe incluant un corps de lampe (1) et un couvercle avant (2) soudé au corps de lampe (1) et ayant une surface avant exposée à l'extérieur,
dans laquelle le corps de lampe (1) est formé d'une résine contenant un premier matériau d'absorption de lumière (5),
le couvercle avant (2) est formé d'une résine contenant un second matériau d'absorption de lumière (6), dans laquelle, lorsque la même lumière laser irradie le couvercle avant (2) et le corps de lampe (1), l'élévation de température produite dans le couvercle avant (2) par le matériau d'absorption de lumière (6) contenu dans le couvercle avant (2) est inférieure à l'élévation de température produite dans le corps de lampe (1) par le matériau d'absorption de lumière (5) contenu dans le corps de lampe (1),
dans laquelle le second matériau d'absorption de lumière (6) est un matériau d'absorption de lumière en une teneur ne provoquant pas la fusion du couvercle avant (2) par la seule irradiation de la lumière rayonnée pendant le soudage.

2. Lampe pour véhicule selon la revendication 1, dans laquelle, seule la région périphérique du couvercle avant (2) ne jouant pas le rôle de lumière d'éclairage, ou la totalité du couvercle avant, contient le second matériau d'absorption de lumière (6).

3. Procédé de fabrication d'une lampe pour véhicule, le procédé comprenant :
l'amenée d'un couvercle avant (2) dont la surface avant est exposée à l'extérieur en contact proche avec un corps de lampe (1) ; et
l'irradiation de lumière laser sur une partie de contact proche pour souder le corps de lampe (1) et le couvercle avant (2),
dans laquelle le corps de lampe (1) est formé d'une résine contenant un premier matériau d'absorption de lumière (5),
le couvercle avant (2) est formé d'une résine contenant un second matériau d'absorption de lumière (6),
dans laquelle, lorsque la même lumière laser irradie le corps de lampe (1) et le couvercle avant (2), l'élévation de température produite dans le couvercle avant (2) par le second matériau d'absorption de lumière (6) est inférieure à l'élévation de température produite dans le corps de lampe (1) par le premier matériau d'absorption de lumière (5),
dans laquelle le second matériau d'absorption de lumière (6) est un matériau d'absorption de lumière en une teneur ne provoquant pas la fusion du couvercle avant (2) par la seule irradiation de la lumière rayonnée pendant le soudage.
